# EUROPÄISCHE PATENTSCHRIFT

(11) **EP 3 328 761 B1**
(45) Veröffentlichungstag und Bekanntmachung des Hinweises auf die Patenterteilung: **21.08.2024**
(21) Anmeldenummer: 16720764.6
(22) Anmeldetag: 22.04.2016
(51) Int. Cl.: B65G 43/02, B65G 43/04, B65G 15/64, B65G 45/16

(54) **FÖRDERANLAGE**
CONVEYING SYSTEM
INSTALLATION DE TRANSPORT

(30) Priorität: 27.07.2015 DE 102015214159
(43) Veröffentlichungstag der Anmeldung: 06.06.2018
(73) Patentinhaber: ContiTech Deutschland GmbH, 30175 Hannover (DE)
(72) Erfinder: KÜSEL, Bernd, 21077 Hamburg (DE)
(74) Vertreter: Continental Corporation
(86) Internationale Anmeldenummer: PCT/EP2016/059022
(87) Internationale Veröffentlichungsnummer: WO 2017/016689

(56) Entgegenhaltungen:
- EP-A1- 0 387 242
- WO-A1-2009/140476
- WO-A1-2009/140476
- WO-A1-2012/021059
- WO-A1-2012/021059
- DE-A1- 10 048 552
- DE-A1- 10 048 552
- DE-A1- 10 106 206
- DE-A1- 10 140 920
- DE-A1- 10 140 920
- DE-A1- 102004 014 084
- DE-A1- 102004 014 084
- DE-A1- 102010 036 331
- DE-A1- 102012 108 417
- DE-A1- 19 929 099
- DE-A1- 19 929 099
- DE-A1- 4 240 094
- KR-A- 20150 076 018
- KR-A- 20150 076 018
- US-A1- 2012 031 736
- US-A1- 2012 031 736

## Beschreibung

Die Erfindung betrifft eine Förderanlage gemäß dem Oberbegriff des Anspruchs 1.

Förderanlagen können sowohl in der Anschaffung als auch im Betrieb sehr teure Investitionen darstellen. Insbesondere kann der Stillstand einer Förderanlage z.B. bei einer Mine zum Stillstand der gesamten Minenanlage inklusive des Abtransports des gewonnenen Materials führen. Hierdurch können enorme Kosten insbesondere durch den Produktionsausfall entstehen.

Aus diesem Grund sind Überwachungssysteme für Fördergurte von Förderanlagen bekannt, damit Beschädigungen und dergleichen möglichst frühzeitig erkannt werden können, bevor die Beschädigungen den Fördergurt und damit die Förderanlage außer Betrieb setzen. Beispielsweise soll bei erkannter Beschädigung eine Warnung erzeugt werden, die vorzugsweise auch eine Lokalisierung des Beschädigung beinhaltet, so dass der Fördergurt angehalten und die Beschädigung vom Personal behoben werden kann.

Eine derartige Einrichtung zur zerstörungsfreien Inspektion eines Fördergurtes wird in der DE 35 17 314 A1 beschrieben. Dort erfolgt das Überwachen, Untersuchen oder Nachprüfen von Fördergurten mittels Röntgenstrahlung, die einen Fördergurt durchdringen kann. Die Röntgenstrahlung, die den Fördergurt durchdrungen hat, wird aufgefangen und erzeugt auf einem Fluoreszenzschirm ein sichtbares Bild des Inneren des Fördergurtes, so dass Schäden innerhalb des Materials des Fördergurtes erkannt werden können. Dieses sichtbare Bild kann visuell vom Personal untersucht oder mittels Videokamera aufgezeichnet werden, um es später visuell untersuchen zu können. Somit sind sowohl die Beschädigungen durch das Personal zu erkennen als auch die hieraus möglichen Schlussfolgerungen durch das Personal zu ziehen sowie auch einzuleiten bzw. umzusetzen. Auch die DE 10 2010 036 637 A1 und die WO 2011/131380 A1 betreffen Einrichtungen zur zerstörungsfreien Inspektion von Fördergurten mittels Röntgenstrahlung. Hierbei erfolgt die Auswertung der Messdaten jedoch jeweils mittels eines Prozessrechners bzw. mittels Bildverarbeitungssoftware, so dass die Auswertung von Bildern durch das Personal der Förderanlage entfallen kann. In beiden Fällen können automatische Fehlermeldungen erzeugt werden, falls eine relevante Beschädigung durch den Prozessrechner bzw. die Bildverarbeitungssoftware erkannt wird. Auf diese Fehlermeldung kann vom Personal reagiert werden, indem die hierzu möglichen Schlussfolgerungen durch das Personal gezogen sowie auch eingeleitet bzw. umgesetzt werden können.

Die DE 101 40 920 A1 beschreibt eine Einrichtung zur Überwachung einer Förderanlage, umfassend einen Fördergurt aus polymerem Werkstoff mit einer Tragseite für das Fördermaterial und einer Laufseite, wobei der Fördergurt zumeist einen eingebetteten Festigkeitsträger aufweist; ein opto-elektronisches System, das im Anlagenbereich, wo es zu einer Fördergurtpenetrierung durch einen Fremdkörper oder zu einem Schieflauf kommen kann, angeordnet ist und dabei den Fördergurt optisch erfasst, und zwar derart, dass bei einer Breitenveränderung bzw. Lageveränderung des Fördergurtes eine Meldung erfolgt sowie sonstige Anlagenteile, nämlich Antriebstrommel, Umkehrtrommel, Tragrollen, Traggerüste, Aufgabeschurre sowie gegebenenfalls weitere Bauteile. Das optoelektronische System ist mit einem Prozessrechner verbunden, der wiederum mit einer Antriebssteuerung gekoppelt ist, und zwar zwecks automatischer Abschaltung der Förderanlage, oder mit einer Korrektursteuerung gekoppelt ist, und zwar zwecks Korrektur des Schieflaufes WO 2012 021059 offenbart eine Förderanlage nach dem Oberbegriff des Anspruchs 1.

Eine Aufgabe der vorliegenden Erfindung ist es, eine Förderanlage der eingangs beschriebenen Art bereit zu stellen, so dass schneller, sicherer und bzw. oder zielgerichteter auf erkannte Beschädigungen des Fördergurtes reagiert werden kann.

Die Aufgabe wird erfindungsgemäß durch eine Förderanlage mit den Merkmalen gemäß Anspruch 1 gelöst. Vorteilhafte Weiterbildungen sind in den Unteransprüchen beschrieben.

Somit betrifft die vorliegende Erfindung eine Förderanlage mit einem endlos geschlossenen Fördergurt und wenigstens einer zerstörungsfrei wirkenden Inspektionseinrichtung zur Inspektion des Fördergurtes, wobei die Inspektionseinrichtung ein Ergebnis der Inspektion erzeugen und ausgeben kann. Die Inspektionseinrichtung kann die zerstörungsfreie Inspektion z.B. mittels Röntgenstrahlung, mittels Lasererfassung bzw. Laserabtastung sowie opto-elektronisch oder magneto-induktiv durchführen. Das Ergebnis der Inspektion können die aufgenommenen Daten der Inspektionseinrichtung sein, welche an anderer Stelle weiterzuverarbeiten und auszuwerten sind, sowie ein Ergebnis einer Auswertung, welche durch die Inspektionseinrichtung selbst vorgenommen werden kann.

Erfindungsgemäß weist die Förderanlage mehrere einstellbare Förderanlagenelemente und wenigstens eine Steuerungseinheit auf, welche die einstellbaren Förderanlagenelemente in Abhängigkeit des Ergebnisses der Inspektion einstellen kann. Die Steuerungseinheit kann eine separate Einheit sein, welche signalübertragend mit der Inspektionseinrichtung verbunden ist, oder die Steuerungseinheit kann Bestandteil der Inspektionseinrichtung sein.

Unter einem einstellbaren Förderanlagenelement ist jede Einrichtung der Förderanlage zu verstehen, welche wenigstens einen Aktor bzw. Antrieb aufweist, welcher gesteuert oder geregelt werden kann. Dieser Aktor bzw. Antrieb kann aufgrund der eigentlichen Funktion des Förderanlagenelements bereits vorhanden sein und im Rahnen der vorliegenden Erfindung zusätzlich in Reaktion auf das Inspektionsergebnis eingestellt werden oder der Aktor bzw. Antrieb kann zusätzlich vorgesehen werden, um die Einstellbarkeit des Förderanlagenelements im Rahmen der vorliegenden Erfindung zu ermöglichen.

Der vorliegenden Erfindung liegt dabei der Gedanke zugrunde, eine Reaktion auf ein Inspektionsergebnis der Inspektionsanlage zu automatisieren anstelle dieses vom Personal ausführen zu lassen. Hierdurch soll der Mensch als Fehlerquelle vermieden werden. Auch sollen definierte Reaktionen auf definierte Inspektionsergebnisse selbsttätig ausgeführt werden können, welche zuvor durch das Personal in der Steuerungseinheit hinterlegt werden können. Diese Inspektionsergebnisse und bzw. oder Reaktionen können auch durch das Personal verändert werden können oder auch weitere Zusammenhänge aufweisen wie z.B. die Abhängigkeit von weiteren Ereignissen wie z.B. zeitlichen Verläufen oder Zeitpunkten.

Mit anderen Worten soll es ermöglicht werden, den Zustand des Fördergurtes permanent und in Echtzeit zu inspizieren und aus dem Erkennen von Veränderungen des Zustands des Fördergurtes automatisch Reaktionen hierauf abzuleiten. Diese Erkenntnis soll mit anderen Anlagenteilen verknüpft und mit ihnen kommuniziert werden. Hierzu sollen aus der Erkenntnis der Veränderung des Zustands des Fördergurtes Handlungen der anderen Anlagenteile abgeleitet und durch diese durchgeführt werden. Somit betrifft die vorliegende Erfindung mit anderen Worten auch eine Vernetzung eines Überwachungssystems einer Förderanlage mit dessen einzelnen Anlagenteilen.

Erfindungsgemäß ist ein einstellbares Förderanlagenelement eine Antriebstrommel. Auf diese Weise kann die Förderanlage automatisch gestoppt werden, falls ein bedrohlicher Fehler bzw. eine bedrohliche Beschädigung oder sogar ein Reißen des Fördergurtes erkannt wird. Es kann ein sofortiges abruptes Stoppen der Anlagen im Notfall erfolgen oder auch der Fördergurt kontrolliert angehalten werden, falls hierfür ausreichend Zeit besteht, was schonender für den Fördergurt sein kann, um die Beschädigung nicht weiter zu verstärken. Auch kann die Antriebsleistung des Fördergurtes über die Antriebstrommel reduziert werden, falls die Beschädigung einen weiteren Betrieb der Förderanlage erlaubt, dies jedoch mit geringerer Leistung, um die Beschädigung nicht zu verstärken. Hierdurch kann die Produktion für eine gewisse Zeit aufrechterhalten werden, um z.B. Reparaturmaßnahmen parallel vorzubereiten und die anschließende Stillstandszeit zu minimieren.

Erfindungsgemäß ist ein einstellbares Förderanlagenelement eine Umlenktrommel. Auf diese Weise kann von der Inspektionseinrichtung ein Schieflauf des Fördergurtes erkannt und durch eine Verstellung der Umlenktrommel korrigiert werden.

Erfindungsgemäß ist ein einstellbares Förderanlagenelement ein Abstreifer. Ein Abstreifer dient der Entfernung von Verunreinigungen der Oberfläche des Fördergurtes z.B. durch das Fördergut und wird deshalb üblicherweise kurz nach der Abgabestelle am Untertrum angeordnet. Wird nun durch die Inspektionseinrichtung eine zu starke verbliebene Verschmutzung auf der Oberseite des Fördergurtes erkannt, kann der Abstand zwischen der Abstreiferkante und der Oberfläche des Fördergurtes geringer eingestellt werden, um die reinigende Wirkung des Abstreifers zu verbessern.

Gemäß einem weiteren Aspekt der vorliegenden Erfindung ist das einstellbare Förderanlagenelement eine Schurre. Werden durch die Inspektionseinrichtung z.B. Längsstreifen im Randbereich der Oberseite des Fördergurtes detektiert, so kann der entsprechende Schurrenstreifen verstellt werden, um diesen Kontakt zu vermeiden.

Gemäß einem weiteren Aspekt der vorliegenden Erfindung ist die Steuerungseinheit eingerichtet, wenigstens das einstellbare Förderanlagenelement zeitverzögert zum Ergebnis der Inspektion einzustellen. Auf diese Weise kann z.B. ein Anhalten der Förderanlage in Anhängigkeit eines erkannten Fehlers des Fördergurtes zeitverzögert erfolgen, so dass ein aufgrund der Inspektionsergebnisse erforderlicher Wartungsstopp oder Stopp zur Reparatur des Fördergurtes mit einem bekannten und ohnehin geplanten Wartungsstopp eines anderen Anlagenteils wie z.B. Motoren oder Getriebe zusammengelegt werden kann. Somit können gleich mindestens zwei Anlagenteile parallel gewartet bzw. repariert werden anstelle von zwei Stopps, wodurch die Stillstandzeiten der Förderanlage und damit die hierdurch bedingten Produktionsausfälle reduziert werden können.

Erfindungsgemäß kann die Steuerungseinheit und bzw. oder die Inspektionseinrichtung das Ergebnis der Inspektion klassifizieren und die Steuerungseinheit das einstellbare Förderanlagenelement in Abhängigkeit der Klassifizierung des Ergebnisses der Inspektion einstellen. Auf diese Weise kann die Intelligenz der vorliegenden Erfindung in der Steuerungseinrichtung bzw. in der Inspektionseinrichtung angeordnet werden, von der aus dann lediglich Handlungsanweisungen an die anderen Anlagenteile versendet werden. Die Klassifikation der Inspektionsergebnisse kann z.B. nach Wichtigkeit bzw. nach Dringlichkeit erfolgen, so dass als Reaktion hierauf ein Not-Stopp-Signal, ein Warnhinweis oder eine Handlungsanweisung an einen Antrieb oder mehrere Antriebe eines einstellbaren Elements oder mehrerer einstellbaren Elemente getätigt werden können.

Gemäß einem weiteren Aspekt der vorliegenden Erfindung kann die zerstörungsfrei wirkende Inspektionseinrichtung die Inspektion mittels energiereicher Strahlung, welche zur Oberfläche des Fördergurtes hin ausgesendet, das Material des Fördergurtes durchdringen und auf der entgegengesetzten Seite des Fördergurtes berührungslos erfasst werden kann, durchführen. Dies können beispielsweise Röntgenstrahlen sein. Eine derartige Anlage ist beispielsweise aus der WO 2011/131380 A1 bekannt. Auf diese Weise kann eine zerstörungsfreie Inspektion des Fördergurtes auch in seinem Inneren ermöglicht werden.

Gemäß einem weiteren Aspekt der vorliegenden Erfindung ist die Steuerungseinheit Bestandteil der Inspektionseinrichtung. Auf diese Weise kann die Signalübertragung des Inspektionsergebnisses schneller erfolgen, so dass auch die Reaktion hierauf schneller bestimmt und ausgelöst werden kann. Ferner kann auf eine weitere Einheit der Förderanlage verzichtet werden, was die Umsetzung der Erfindung einfacher und günstiger machen und die Akzeptanz des Anlagenbetreibers steigern kann.

Ein Ausführungsbeispiel und weitere Vorteile der Erfindung werden nachstehend im Zusammenhang mit den folgenden Figuren erläutert. Darin zeigt:
- Fig. 1: eine schematische seitliche Darstellung einer erfindungsgemäßen Förderanlage; und
- Fig. 2: ein schematisches Blockschaltbild des Zusammenwirkens verschiedener Förderanlagenelemente der erfindungsgemäßen Förderanlage.

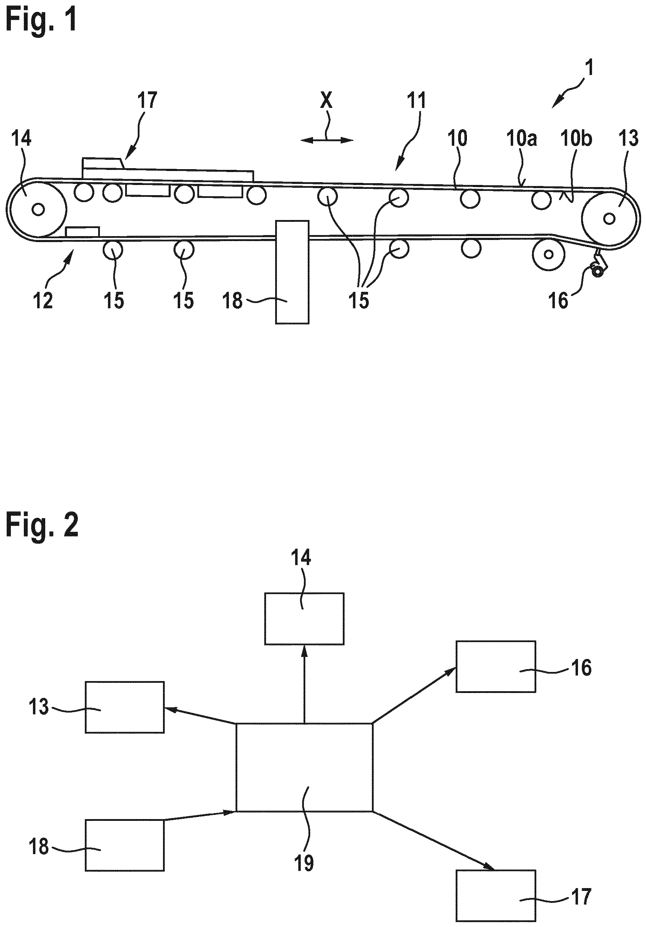

Fig. 1 zeigt eine schematische seitliche Darstellung einer erfindungsgemäßen Förderanlage 1. Die Förderanlage 1 verläuft im Wesentlichen in einer Längsrichtung X, welche daher auch als Förderrichtung X bezeichnet werden kann. Die Förderanlage 1 kann auch als Transportbandanlage 1 bezeichnet werden.

Die Förderanlage 1 weist einen endlos geschlossenen Fördergurt 10 auf, der auch als Transportband 10 bezeichnet werden kann. Der Fördergurt 10 weist eine Oberseite 10a auf, auf der das Fördergut (nicht dargestellt) befördert werden kann. Das Fördergut kann insbesondere loses Schüttgut wie z.B. Abbauprodukte einer Mine sein, aber es können auch andere Schüttgüter wie z.B. Sand, Kies, Lebensmittel, Chemikalien etc. transportiert werden.

Der Oberseite 10a gegenüberliegend weist der Fördergurt 10 eine Unterseite 10b auf, auf der der Fördergurt 10 auf einer Antriebstrommel 13, einer Umlenktrommel 14 sowie einer Vielzahl von Tragrollen 15 aufliegt und über die der Fördergurt 10 angetrieben und geführt werden kann. Der obere Laufweg des Fördergurtes 10, während dessen das Fördergut transportiert werden kann, kann als Obertrum 11 und der untere Laufweg als Untertrum 12 bezeichnet werden. Im Bereich des Obertrums 11 ist an der Aufgabestelle des Förderguts auf den Fördergurt 10 nahe der Umlenktrommel 14 eine Schurre 17 vorgesehen, um das Fördergut definiert auf den Fördergurt 10 aufzugeben. Im Bereich des Untertrums 12 ist in Förderrichtung X kurz nach der Antriebstrommel 13 ein Abstreifer 16 vorgesehen, um die Oberseite 10a des Fördergurtes 10 möglichst bald nach der Abgabe des Förderguts von Verschmutzungen zu reinigen.

In Förderrichtung X ist jenseits des Abstreifers 16 eine Inspektionseinreichung 18 in Form einer Röntgeneinreichung 18 angeordnet, welche auch als Überwachungseinrichtung 18 bezeichnet werden kann. Die Inspektionseinrichtung 18 ist ausgebildet, den durch den Abtreifer 16 gereinigten und fördergutfreien Fördergurt 10 auf seine Beschaffenheit äußerlich und innerlich zu inspizieren. Hierbei soll jeder Kubikmillimeter des Fördergurtes 10 bzw. seines Materials erfasst und ausgewertet werden. Dies kann mittels einer Steuerungseinheit 19 erfolgen, welche auch als Prozessrechner 19 bezeichnet werden kann. Die Steuerungseinheit 19 ist vorzugsweise ein Bestandteil der Inspektionseinrichtung 18.

Fig. 2 zeigt ein schematisches Blockschaltbild des Zusammenwirkens verschiedener Förderanlagenelemente 13, 14, 16, 17 der erfindungsgemäßen Förderanlage 10. Erfindungsgemäß sind die zuvor genannten Elemente der Förderanlage 10 wie Antriebstrommel 13, Umlenktrommel 14, Abstreifer 16 und Schurre 17 einstellbar ausgestaltet. Dies bedeutet, dass diese Förderanlagenelemente 13, 14, 16, 17 jeweils zusätzliche Aktoren aufweisen, die durch die Steuerungseinheit 19 gesteuert werden können, oder dass die vorhandenen Aktoren zusätzlich zu ihrer üblichen Funktion durch die Steuerungseinheit 19 steuerbar sind.

Wird somit bei der Inspektion des Fördergurtes 10 durch die Inspektionseinrichtung 18 eine Abweichung vom vorgegebenen normalen Zustand erkannt, so wird dieses Inspektionsergebnis an die Steuerungseinheit 19 weitergeleitet. Von der Steuerungseinheit 19 wird dann die Reaktion auf das Inspektionsergebnis ermittelt und die entsprechenden Anweisungen an das entsprechende einstellbare Förderanlagenelement 13, 14, 16, 17 gegeben. Dies kann z.B. eine Verringerung der Antriebsleistung der Antriebstrommel 13, eine Schieflaufkorrektur der Umlenktrommel 14, eine Korrektur der Schurrenstreifen der Schurre 17 oder eine Abstandskorrektur des Abstreifers 16 sein. Auch kann es zu einem Not-Stopp der Förderanlage 10 kommen. Ferner kann die Förderanlage 10 angehalten werden, um eine Beschädigung des Fördergurtes 10 durch Personal zu beheben oder auch durch Personal inspizieren zu können. Dieses Anhalten des Fördergurtes 10 kann auch selbststätig zeitlich versetzt und gleichzeitig mit einem ohnehin geplanten Wartungsstopp der Förderanlage 10 erfolgen, um die Zeit der angehaltenen Förderanlage 10 und damit der Förderausfälle zu minimieren.

### Bezugszeichenliste

### (Teil der Beschreibung)

- X: Längsrichtung, Förderrichtung

- 1: Förderanlage, Transportbandanlage
- 10: Fördergurt, Transportband
- 10a: Oberseite des Fördergurtes 10
- 10b: Unterseite des Fördergurtes 10
- 11: Obertrum
- 12: Untertrum
- 13: (verstellbare) Antriebstrommel
- 14: (verstellbare) Umlenktrommel
- 15: Tragrollen
- 16: (verstellbarer) Abstreifer
- 17: (verstellbare) Schurre
- 18: Inspektionseinreichung, Überwachungseinrichtung
- 19: Steuerungseinheit, Prozessrechner

## Patentansprüche

1. Förderanlage (1), mit
einem endlos geschlossenen Fördergurt (10),
wenigstens einer zerstörungsfrei wirkenden Inspektionseinrichtung (18) zur Inspektion des Fördergurtes (10),
wobei die Inspektionseinrichtung (18) ein Ergebnis der Inspektion erzeugen und ausgeben kann,
mehreren einstellbaren Förderanlagenelementen (13, 14, 16, 17), und
wenigstens eine Steuerungseinheit (19), welche die einstellbaren Förderanlagenelemente (13, 14, 16, 17) in Abhängigkeit des Ergebnisses der Inspektion einstellen kann,
wobei ein einstellbares Förderanlagenelement (13, 14, 16, 17) eine Antriebstrommel (13) ist,
wobei ein einstellbares Förderanlagenelement (13, 14, 16, 17) eine Umlenktrommel (14) ist, und
**dadurch gekennzeichnet, dass**
ein einstellbares Förderanlagenelement (13, 14, 16, 17) ein Abstreifer (16) ist, und, **dass**
die Steuerungseinheit (19) und/oder die Inspektionseinrichtung (18) das Ergebnis der Inspektion klassifizieren und die Steuerungseinheit (19) das einstellbare Förderanlagenelement (13, 14, 16, 17) in Abhängigkeit der Klassifizierung des Ergebnisses der Inspektion einstellen kann.

2. Förderanlage (1) gemäß Anspruch 1,
wobei das einstellbare Förderanlagenelement (13, 14, 16, 17) eine Schurre (17) ist.

3. Förderanlage (1) gemäß einem der Ansprüche 1 oder 2,
wobei die Steuerungseinheit (19) eingerichtet ist, wenigstens das einstellbare Förderanlagenelement (13, 14, 16, 17) zeitverzögert zum Ergebnis der Inspektion einzustellen.

4. Förderanlage (1) gemäß einem der vorherigen Ansprüche,
wobei die zerstörungsfrei wirkende Inspektionseinrichtung (18) die Inspektion mittels energiereicher Strahlung, welche zur Oberfläche des Fördergurtes (10) hin ausgesendet, das Material des Fördergurtes (10) durchdringen und auf der entgegengesetzten Seite des Fördergurtes (10) berührungslos erfasst werden kann, durchführen kann.

5. Förderanlage (1) gemäß einem der vorherigen Ansprüche,
wobei die Steuerungseinheit (19) Bestandteil der Inspektionseinrichtung (18) ist.

## Claims

1. Conveying system (1) comprising
an endlessly closed conveying belt (10),
at least one inspection device (18), acting in a destruction-free manner, for inspecting the conveying belt (10),
wherein the inspection device (18) can generate and output a result of the inspection,
a plurality of settable conveying system elements (13, 14, 16, 17), and
at least one control unit (19), which can set the settable conveying system elements (13, 14, 16, 17) in dependence of the result from the inspection, wherein a settable conveying system element (13, 14, 16, 17) is a drive drum (13), wherein a settable conveying system element (13, 14, 16, 17) is a deflection drum (14), and
**characterized in that** a settable conveying system element (13, 14, 16, 17) is a scraper (16), and **in that**
the control unit (19) and/or the inspection device (18) classify the result from the inspection and the control unit (19) can set the settable conveying system element (13, 14, 16, 17) in dependence on the classification of the result from the inspection.

2. Conveying system (1) according to Claim 1,
wherein the settable conveying system element (13, 14, 16, 17) is a chute (17).

3. Conveying system (1) according to either of Claims 1 and 2,
wherein the control unit (19) is configured to set at least the settable conveying system element (13, 14, 16, 17) with a time delay relative to the result from the inspection.

4. Conveying system (1) according to any of the preceding claims,
wherein the inspection device (18), acting in a destruction-free manner, can carry out the inspection by means of high-energy radiation, which is emitted towards the surface of the conveying belt (10), can penetrate the material of the conveying belt (10) and can be recorded contactlessly on the opposite side of the conveying belt (10).

5. Conveying system (1) according to any of the preceding claims,
wherein the control unit (19) is a constituent part of the inspection device (18).

## Revendications

1. Installation de transport (1), comprenant
une bande transporteuse fermée sans fin (10),
au moins un dispositif d'inspection agissant de manière non destructive (18), servant à inspecter la bande transporteuse (10),
le dispositif d'inspection (18) pouvant produire et délivrer un résultat d'inspection, plusieurs éléments d'installation de transport réglables (13, 14, 16, 17), et
au moins une unité de commande (19) qui peut régler les éléments d'installation de transport réglables (13, 14, 16, 17) en fonction du résultat de l'inspection,
un élément d'installation de transport réglable (13, 14, 16, 17) étant un tambour d'entraînement (13),
un élément d'installation de transport réglable (13, 14, 16, 17) étant un tambour de renvoi (14), et
**caractérisé en ce qu'**un élément d'installation de transport réglable (13, 14, 16, 17) est un racleur (16), et **en ce que**
l'unité de commande (19) et/ou le dispositif d'inspection (18) peuvent classifier le résultat de l'inspection et l'unité de commande (19) peut régler l'élément d'installation de transport réglable (13, 14, 16, 17) en fonction de la classification du résultat de l'inspection.

2. Installation de transport (1) selon la revendication 1,
dans laquelle l'élément d'installation de transport réglable (13, 14, 16, 17) est une goulotte (17).

3. Installation de transport (1) selon l'une des revendications 1 ou 2,
dans laquelle l'unité de commande (19) est conçue pour régler au moins l'élément d'installation de transport réglable (13, 14, 16, 17) de manière retardée par rapport au résultat de l'inspection.

4. Installation de transport (1) selon l'une des revendications précédentes, dans laquelle le dispositif d'inspection agissant de manière non destructive (18) peut effectuer l'inspection à l'aide d'un rayonnement à haute énergie, qui est émis vers la surface de la bande transporteuse (10), pénètre dans le matériau de la bande transporteuse (10) et peut être détecté sans contact du côté opposé de la bande transporteuse (10).

5. Installation de transport (1) selon l'une des revendications précédentes, dans laquelle l'unité de commande (19) fait partie du dispositif d'inspection (18).
